# EUROPEAN PATENT SPECIFICATION

(11) **EP 1 410 458 B1**
(45) Date of publication and mention of the grant of the patent: **02.08.2006**
(21) Application number: 01911856.1
(22) Date of filing: 06.03.2001
(51) Int. Cl.: H01M 10/04

(54) **IMPROVEMENTS TO RECHARGEABLE BATTERIES**
VERBESSERUNGEN AN WIEDERAUFLADBAREN BATTERIEN
BATTERIES RECHARGEABLE AMELIOREES

(30) Priority: 06.03.2000 GB 0005359
(43) Date of publication of application: 21.04.2004
(73) Proprietor: Morgan, Richard, Enfield, Middlesx EN2 7BG (GB)
(72) Inventor: Morgan, Richard, Enfield, Middlesx EN2 7BG (GB)
(74) Representative: Whitaker, Iain Mark
(86) International application number: PCT/GB2001/000955
(87) International publication number: WO 2001/067526

(56) References cited:
- EP-A- 0 671 561
- GB-A- 2 292 845
- US-A- 4 303 877

## Description

### Field of the Invention

The present invention concerns improvements in and relating to rechargeable batteries.

### Background to the Invention

Major advances have been made in recent years in computing and telecommunications electronic hardware, and in part because of the heavy investment in research and development in these high technology areas, advancements are now being pursued in the field of battery design.

The compelling objectives of increasing battery capacity while reducing their volume and weight and meeting ecological concerns are now being achieved *inter alia* through the introduction of nickel metal hydride (Ni-MH) batteries. Such batteries offer higher energy densities than Ni-Cad batteries enabling downscaling of the batteries while enhancing the run time of the batteries. A Ni-MH battery has approximately double the capacity of an equivalent sized Ni-Cad battery.

Although Ni-MH batteries have greater capacity per unit size and weight and are more ecologically acceptable, care must still be taken with these batteries since they are prone to risk of oxygen or hydrogen build up. Oxygen is normally generated at the positive electrode toward the end of charging of the Ni-MH cell and must be consumed to avoid pressure build up. Hydrogen is generated throughout the charging of the battery and is normally stored as the hydride of the metal alloy anode. Mistreatment of the battery may, however, lead to build up of hydrogen. Build up of either of these gases can represent a significant hazard.

A relatively slower rate of charging than Ni-Cad batteries and lesser high drain capability represent further limitations of NiMH batteries and neither NiCad nor NiMH batteries exist with high current yield (e.g. 64 Amps) or which can be rapidly charged to such a level (e.g. in as little as four hours). This severely limits the usefulness of these batteries. Furthermore these batteries are rendered useless at markedly sub-zero ambient temperatures.

It is a general objective of the present invention to overcome or significantly mitigate one or more of the aforementioned serious problems.

### Summary of the Invention

According to a first aspect of the present invention there is provided an improved rechargeable battery which comprises: a plurality of battery cells at least some of which are connected together to discharge in parallel, each of the parallel discharging cells, or each group of parallel discharging groups of the cells, having its own respective recharging input ; and an electrical switching means to switch a number of the battery cells or groups of cells from being connected to discharge in parallel to instead connect to their respective recharging input for recharging each of said cells or group of cells individually,

With this configuration the cells are able to yield a considerably higher current and be recharged far more rapidly than conventional Ni-MH and Ni-Cad batteries.
The individual cells or groups of cells that are arranged to discharge in parallel to each other can be substantially simultaneously recharged by being recharged independently of each other leading to great savings in recharging time.
The groups of cells that are arranged to discharge in parallel to other groups are suitably battery packs within which a plurality of cells are arranged in series

Once recharging has been accomplished the switching means may revert, suitably in response to a signal, to re-connect the cells for discharging in parallel.

The recharging input for each battery cell or group of cells suitably comprises a respective pin of a multi pin plug such as, for example, an Amphenol plug. A corresponding recharging device is suitably provided and which comprises a plurality of recharging means in a housing and having a connector having a plurality of pins or sockets to couple to a said rechargeable battery.

The switch means that transfers the cells or groups of cells from discharge to recharge may be an electrical component or circuit and is suitably an electrical switching means that can be electrically triggered to switch over multiple cells or groups of cells simultaneously.

The preferred electrical switching means comprises one or more relays and particularly preferably comprise multi poled relays. In the preferred embodiment the or each relay is a relay having four or more poles.

Preferably at least one of and suitably both of the recharging inputs and switching means are integrally assembled with the battery suitably being on or within a casing of the battery. These could however, be part of an interface module that is coupled to the battery in use.

The battery preferably further comprises a processing means and sensors to sense and monitor the charge status of the battery.

Particularly preferably the processing means is adapted to monitor the charge status of each cell or group of cells independently of each other cell or group of cells.

Particularly preferably the sensors, or further sensors, sense the temperature of at least one of the cells or groups of cells individually or of the cells as a whole and the processing means is adapted to alter the rate of recharging or stop recharging if the temperature exceeds predetermined limits.

In a particularly preferred embodiment of the invention in which the battery has a battery casing adapted for thermal insulation, the casing is made from aluminium or other suitable metal or metal alloy and is coated in nylon and particularly preferably a type of nylon that is known as RILSAN (registered trade mark - ATOCHEM Elf Aquitaine).

A double coating of the nylon is suitably applied to both the inner and outer surfaces of the casing. The thermal insulation is highly effective and may be further enhanced by the use of foam-in-place resin such as polyurethane resin that is introduced into the battery within the casing to foam and cure and fill out voids within the casing.

With these measures it is possible to sufficiently insulate the battery to enable it to operate at temperatures as low as -20 to -25°C. However, for the battery to be able to operate in extreme polar weather conditions further enhancements are required.

Operation of the battery at temperatures below -25°C and to as low as -52°C or thereabouts can be achieved through redesign of the casing, as follows.

In one aspect of the invention a battery comprising a plurality of the cells is housed within an inner casing that is housed in turn within an outer casing and having an air gap between the inner casing and the outer casing and with heating means being provided to heat the air gap in response to temperature sensing means that senses any reduction of the temperature of the air in the air gap below a predetermined threshold. The heating means is suitably powered by the battery and although it will drain some of the battery's charge it enables operation in previously impossible operating conditions.

In a yet further important aspect of the present invention there is provided a rechargeable battery comprising the plurality of battery cells in a casing, the battery cells being of nickel metal hydride type and the casing having an electrically operated vent in the casing and which opens when the battery is coupled to a recharging device. This vent suitably opens automatically on initiation of recharging and closes automatically upon completion of recharging.

### Brief description of the drawings

A preferred embodiment of the present invention will now be described, by way of example, with reference to the accompanying drawings wherein:-
Figure 1 is a schematic general circuit diagram of the preferred embodiment of rechargeable battery, here shown as comprising 16 battery packs/groups of cells each having 10 cells in series and with an integral electronic module for monitoring the charge status of the battery;
Figure 2 is a schematic sectional view of the battery housed within a casing having an inner and outer shell incorporating temperature regulation of the air gap between the shells and a safety venting means for use during recharging.

### Description of the Preferred Embodiment

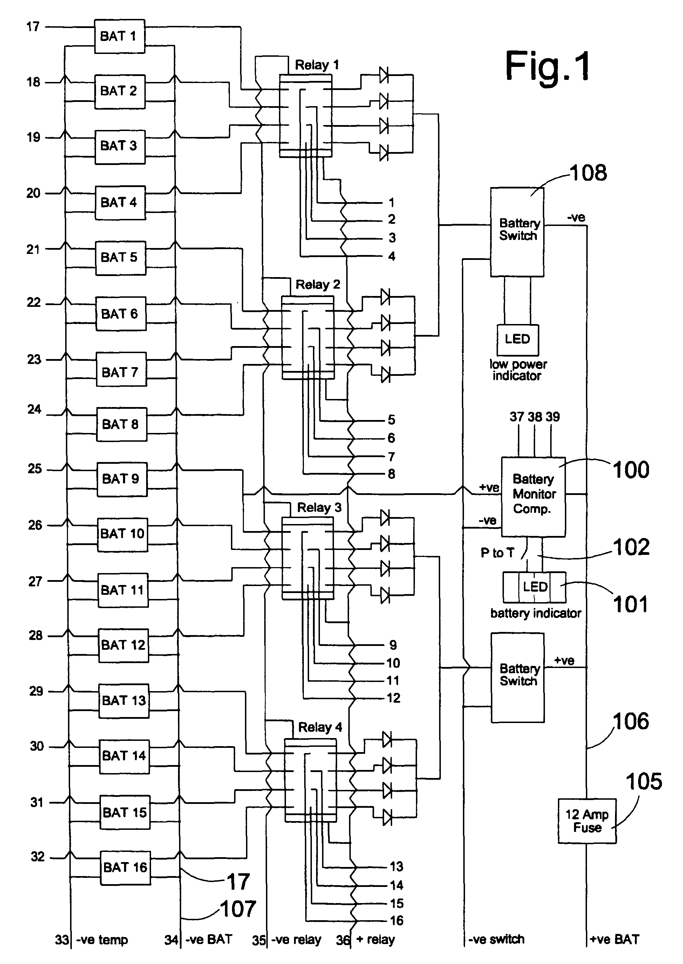

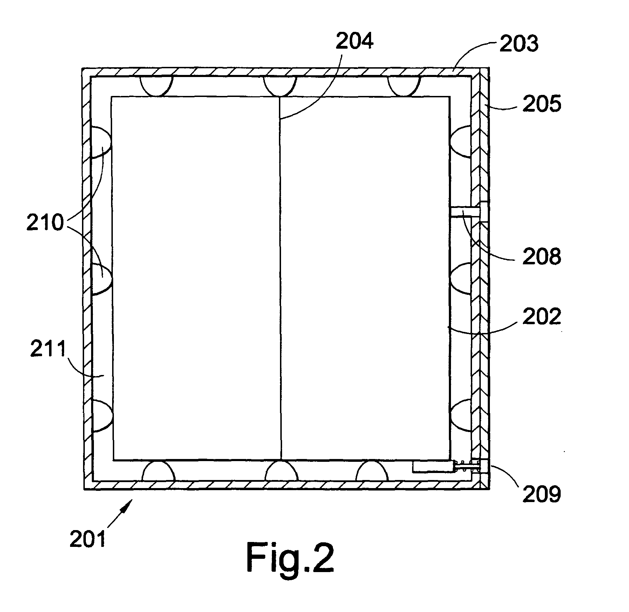

Referring to Figure 1, sixteen Ni-MH battery packs BAT 1 - BAT 16 each pack having ten cells in series and storing 4Ah of charge, are positioned inside the battery casing 201 (Figure 2).

Each battery pack BAT 1 - BAT 16 contains its own protection devices and allows an in-built redundancy capability down to the last remaining pack.

The casing 201 for the rechargeable battery comprises an inner shell 202, an outer shell 203 made from 2mm rigidised aluminium, in the shape of a box with a removable lid. All corners and joints at least of the outer shell 203 are welded to improve structural strength and to prevent water from entering the rechargeable battery unit.

Both the inner and outer shells 202, 203 are covered with a double coating of 'Rilsan Nylon' giving an extremely hard wearing surface as well as reducing internal condensation to a minimum.

The inner shell 202 is suitably divided into two compartments via a bulk-head, 204 one for the battery packs and the other for the "electronics".

A removable plate module 205 situated on the front of the casing 201 contains/presents to the user the necessary plugs and sockets for connecting to a load or to a recharging device, as well as a press to test switch 102, an LED display unit 101 and a safety venting valve209. This module plate 205 is suitably attached to the casing 201 via eight Allen key bolts together with a rubber gasket and silicone compound to prevent water leakage.

The lid of the casing 201 is suitably also is fitted via eight Allen key bolts together with a rubber gasket and silicone rubber compound.

To facilitate handling, two 'D' handles are suitably situated at the front of the battery. The handles will prevent damage to the sockets as well as providing a carrying capability.

### Electronics

The positive terminal of each battery pack BAT1 - BAT16 is connected to one of four 100g shock Mil spec four pole relays, Relay 1-4. The park mode terminal within the relay for each battery pack BAT 1 - BAT 16 is fitted with a diode providing feedback current protection. The preferred diode is a Schottky diode, suitably IN5820RL.

All sixteen outputs from the diodes are connected together via two battery switches SW1, SW2 (or suitably more - e.g. four in one preferred embodiment) designed to avoid the over discharge of the battery packs BAT 1 - BAT 16. A 12 Amp thermal fuse 105 is fitted to the positive output lead 106, protecting the battery from accidental short circuit of the output leads 106,107.

When the charger (not shown) is plugged into the battery, the relay switches Relay 1-4 are changed to the charging terminals which effectively separates the positive output terminals for each of the sixteen battery packs BAT 1-16.

The relay charging terminals are connected to a forty one pin Amphenol plug 208 situated on the battery front plate module 105.

One of the 10K NTC thermistor legs from each battery pack BAT 1 - BAT 16 is also connected to a pin of the forty one pin Amphenol plug 208. The other leg being joined together with the other packs BAT 1 - BAT 16 in turn connected to the forty one pin plug 208 as a common negative.

All sixteen battery pack BAT 1 - BAT 16 negative terminals are joined together as a common negative line 17 which in turn is split into two legs, one of which runs to the negative output 107 and the other of which runs to the forty one pin plug 208.

A separate 12 volt feed is also connected to the forty one pin plug 208 enabling the relays Relay 1 - Relay 4 to be switched when the charger is connected.

An on-board battery analyser 100 together with a gas gauge (not shown) is fitted to the unit allowing an accurate indication of battery state as well as cycle count to be obtained.

A four segment LED display 101 informs the user via a push button 102 (press to test) the exact state of battery capacity including low battery indication.

### Smart Battery Module

This comprises the on-board battery analyser 100 and gauge together with the display 101.

### Short benefits

- Instant display of battery capacity via LEDs including low battery indication.
- Battery state, including cycle count, via the SMBus.
- Possibility to integrate monitor with host end equipment processor

### Features

- Compliant with SMBus specification revision 1.0.
- Based on the BQ2040.
- Accurate battery capacity measurement using coulomb counter.
- LED display on demand.
- Low power consumption
- Low battery indication on demand via LEDs.
- Full host communication on SMBus.

The gas gauge uses a sophisticated Voltage to Frequency Converter (VFC) to measure the voltage due to discharge/charge current through a milliohm sense resistor. The wide dynamic range and noise resistance inherent in the integration methodology of the VFC is idea for battery applications. It is also non-quantitised and resolution is theoretically infinite (time dependant).

The data acquired by the VFC is conditioned according to 'rules' laid out in the configuration EEprom by an on board RISC processor. This conditioning is dynamic and takes into account the rate and temperature compensation for the battery chemistry used. (Defined in the configuration data held in the EEprom).

Data is provided to a host on demand via a two wire (relative to common) serial interface bus according to the SMBus revision 1.0 specification. The module will also broadcast critical data on the bus.

LED indication is provided on demand by a switch contact. There are four LEDs rated each at 25% capacity. LED number 4 (last 25%) also flashes on low battery capacity when the switch demand is applied.

The module can measure in absolute mode (remaining capacity against design capacity) or relative mode (remaining capacity against full charge capacity - FCC).

Cycle count is also stored where cycle count is defined as a minimum charge/discharge movement.

Self-discharge compensation according to the chemistry is available and dynamically adjusts with temperature.

Initially the module must learn the battery capacity by going from a valid discharge to a full charge (to FCC which is initially set lower than the design capacity to ensure that the ensuing 'count down' from the FCC to the end voltage is valid and then this sets the FCC). As the battery ages the capacity is tracked. Actual capacity versus design capacity at the end of a valid charge is a figure of merit for the battery condition.

### Power consumption

- Typical 230 micro Amps
- Maximum 300 micro Amps

### Display

Each LED (1-4) represents 25% of the capacity mode selected (absolute or relative). Default is relative mode. The display will run for about 4 seconds on application of the switch.

Threshold switching accuracy is of the order of 5% between LED segments.

LED 4 will flash on low battery at about 10%.

### Low Voltage Protection Switch

- Low impedance
- Lower power consumption
- Configurable in profile and performance
- LED warning indicator when switch is about to operate.
- High speed electronic switching.

The switch 108 is a battery switch designed to avoid the over discharging of the internal battery packs within the rechargeable battery.

Over discharging cells can reduce life cycle expectancy. It can also result in cell reversal where individual cell(s) within the pack reverse polarity due to the action of 'better' cells within the pack during the discharge process towards the end of remaining pack capacity. Cell reversal will permanently damage the pack which will become unserviceable.

Power consumption is around 250 micro amps and is a compromise between cost and consumption relevant to a practical realisation in such a multiple cell configuration.

The control circuit is a FET switch driven by control logic fronted by a sensitive quad comparator which has an internal reference.

On power up the control circuit will lock in around 7V and if the supply is greater than 12.5V the control FET will be switched on due to the resolution of the battery voltage measured by the potential divider versus the rising comparator.

If the voltage is less than 12.3V on the application of power to the circuit the FET will remain off until a charging supply causes the voltage to exceed this limit. NOTE: this status DOES NOT mean there is any particular capacity in the battery.

In use, as the battery reaches the knee of its discharge curve the falling voltage comparator will cut in and switch on the LED warning. This voltage is set at 10.5 volts. The load, if applied, will be disconnected by the control FET being switched to high impedance. In this state the current consumption is less than 2.5mA.

As the battery potential falls further than 9.5V the LED drive is cut off and the current consumption of the circuit falls to less than 250 micro amps. The circuit will remain in this state until the battery is recharged beyond 12.3V when the discharge control FET will be switched on allowing a load to be connected to the battery.

If during the low battery standby condition the voltage falls below about 7V then the circuit operation will become indeterminate. Note, on rising voltage from a very low battery (<9V) the LED will illuminate as the voltage rises past 9.5v but will extinguish at 12.3V, coinciding with the FET switching on and so allowing normal discharge.

As the switch is disconnected for charging and reconnected for operation use then providing the battery voltage is greater than 12.5V the control FET will be switched on allowing load current to flow.

The design is 'well sedated' to allow for resistance to circuit transients due to load disturbances. This includes filtering of the power supply circuit and comparator inputs.

A Schottky diode across the control FET ensures its integrity under negative spikes. It also allows a charge path when the FET is turned off. Across the load side of the circuit a fast clamp is provided to ensure that the voltage breakdown of the circuit cannot be exceeded.

To summarise, two potentials exist on the hestarisis curve, one rising and one falling.

When the battery is in operation and it is under load, the battery will continue to operate until it reaches around 9.5V to 10.5V depending on conditions. At that point the switch will switch the battery off.

If the battery is left in a discharged state and then brought into operation (without charging), it will not function until the battery has been charged to above 12.3V.

### Electronic Battery Charger

This is suitably designed to provide all the intelligence to safely, consistently and efficiently fast charge the rechargeable battery.

At 'switch on' from the mains a row of LEDs on the charger will give two flashes to confirm that the charging circuits are operating correctly and that there is no malfunction with the charger.The unit is fitted with a switchable buzzer to inform the operator when the battery is fully charged.

Two seconds after the flashes have finished, the charger is ready for use.
Once a start button has been pressed the charging process begins.
Both a second and third row of LEDs of the charger will be on, with the top row flashing. This indicates that all the charging circuits are operating correctly.
When the charge cycle is complete the second and third row of LEDs will be off and the top row will all be constant.

If the buzzer is switched in, it will sound when the last flashing LED is constant informing the operator that the battery is fully charged.

The charger suitablyhas an automatic heat sensing shut down system as well as delta peak sensing to provide an added safeguard.

Ni-MH batteries have a lower negative delta V than Ni-Cads so Peak Voltage Detect (PVD) is used.

Validation checks if the temperature range of the battery is outside limits or its end voltage (Edv) is too low then the charger enters its pending stage until such time as these validation parameters come within limits.

After the validation phase, a sense resistor connected between battery negative and the charger zero volt (Vss) provides the necessary signal to the servo control loop which regulates the charging current.

The charger unit consists of sixteen individual chargers, each delivering 0.3C (900 mA) to each internal pack.

Should one or more of the charging cards fail the unit will still be able to charge, which gives the charger a large redundancy capability.

## Claims

1. An improved rechargeable battery which comprises: a plurality of battery cells at least some of which are connected together to discharge in parallel, each of the parallel discharging cells, or each group of parallel discharging groups of the cells having its own respective recharging input; and a switching means to switch a number of the parallel discharging battery cells or groups of cells to connect to their respective recharging input for recharging each said cell or group of cells individually.

2. An improved rechargeable battery as claimed in claim 1 wherein each cell is a nickel metal hydride or a Ni-Cad cell.

3. An improved rechargeable battery as claimed in claim 1 or 2 wherein the recharging input for each battery cell or group of cells comprises a respective pin of a multi pin plug.

4. An improved rechargeable battery as claimed in claim 1, 2 or 3 in combination with a corresponding recharging device which comprises a plurality of recharging means in a housing and having a connector having a plurality of pins or sockets to couple to said rechargeable battery.

5. An improved rechargeable battery as claimed in claim 1, 2, 3 or 4 wherein the electrical switching means comprises one or more relays.

6. An improved rechargeable battery as claimed in claim 5 wherein the relays comprise multi poled relays.

7. An improved rechargeable battery as claimed in claim 6, wherein the or each relay is a relay having four or more poles.

8. An improved rechargeable battery as claimed in any preceding claim wherein the battery further comprises a processor and sensors to sense and monitor the charge status of the battery.

9. An improved rechargeable battery as claimed in claim 8 wherein the processor is adapted to monitor the charge status of each cell or group of cells independently of each other cell or group of cells.

10. An improved rechargeable battery as claimed in claim 8 or 9 wherein the sensors, or further sensors, sense the temperature of at least one of the cells or groups of cells individually or of the cells as a whole and the processor is adapted to alter the rate of recharging or stop recharging if the temperature exceeds predetermined limits.

11. An improved rechargeable battery as claimed in any preceding claim, wherein the battery has a battery casing adapted for thermal insulation and the casing is made from aluminium or other suitable metal or metal alloy and is coated in nylon.

12. An improved rechargeable battery as claimed in claim 11 wherein the coating of nylon is of a type of nylon that is known as RILSAN (registered trade mark - ATOCHEM Elf Aquitaine).

13. An improved rechargeable battery as claimed in claim 11 or 12 wherein a double coating of the nylon is applied to both the inner and outer surfaces of the casing.

14. An improved rechargeable battery as claimed in any preceding claim wherein a foam-in-place resin is introduced into the battery within the casing to foam and cure and fill out voids within the casing.

15. An improved rechargeable battery as claimed in any preceding claim in which a plurality of cells are housed within an inner casing that is housed in turn within an outer casing and having an air gap between the inner casing and the outer casing and with a heater being provided to heat the air gap in response to a temperature sensor that senses any reduction of the temperature of the air in the air gap below a predetermined threshold.

16. An improved rechargeable battery as claimed in claim 15, wherein the heating means is powered by the battery.

17. A improved rechargeable battery as claimed in any preceding claim wherein the plurality of battery cells are housed in a casing, the battery cells being of nickel metal hydride type and the casing having an electrically operated vent in the casing and which opens when the battery is coupled to a recharging device.

18. A rechargeable battery as claimed in claim 17 wherein the vent opens automatically on initiation of recharging and closes automatically upon completion of recharging.

## Patentansprüche

1. Verbesserte wiederaufladbare Batterie, umfassend: eine Pluralität von Batteriezellen, von denen mindestens einige miteinander verbunden sind, um parallel zu entladen, wobei jede der parallel entladenden Zellen oder jede Gruppe von parallel entladenden Zellengruppen ihren eigenen jeweiligen Wiederaufladungseingang aufweist; und ein Schaltmittel zum Umschalten einer Anzahl der parallel entladenden Batteriezellen oder Zellengruppen zum Verbinden mit ihrem jeweiligen Wiederautladungseingang zum individuellen Wiederaufladen jeder Zelle oder Zellengruppe.

2. Verbesserte wiederaufladbare Batterie nach Anspruch 1, wobei jede Zelle eine Nickelmetallhybrid- oder Ni-Cad-Zelle ist.

3. Verbesserte wiederaufladbare Batterie nach Anspruch 1 oder 2, wobei der Wiederaufladungseingang für jede Batteriezelle oder Zellengruppe einen jeweiligen Stift eines Mehrstiftsteckers umfasst.

4. Verbesserte wiederaufladbare Batterie nach Anspruch 1, 2 oder 3 in Kombination mit einer korrespondierenden Wiederaufladungsvorrichtung, die eine Pluralität von Wiederaufladungsmitteln in einem Gehäuse umfasst und ein Verbindungsglied mit einer Pluralität von Stiften oder Buchsen zum Verkuppeln mit der wiederaufladbaren Batterie.

5. Verbesserte wiederaufladbare Batterie nach Anspruch 1, 2, 3 oder 4, wobei das elektrische Schaltmittel ein oder mehrere Relais umfasst.

6. Verbesserte wiederaufladbare Batterie nach Anspruch 5, wobei die Relais aus mehrpoligen Relais bestehen.

7. Verbesserte wiederaufladbare Batterie nach Anspruch 6, wobei das oder jedes Relais ein Relais mit vier oder mehr Polen ist.

8. Verbesserte wiederaufladbare Batterie nach einem der vorangehenden Ansprüche, wobei die Batterie weiterhin einen Prozessor und Sensoren zum Erfassen und Überwachen des Ladestatus der Batterie umfasst.

9. Verbesserte wiederaufladbare Batterie nach Anspruch 8, wobei der Prozessor zur Überwachung des Ladestatus jeder Zelle oder Zellengruppe unabhängig von jeder anderen Zelle oder Zellengruppe angepasst ist.

10. Verbesserte wiederaufladbare Batterie nach Anspruch 8 oder 9, wobei die Sensoren oder weitere Sensoren die Temperatur von mindestens einem der Zellen oder Zellengruppen individuell oder der Zellen als Gesamtheit erfassen und der Prozessor zur Änderung der Wiederaufladungsrate oder zum Anhalten der Wiederaufladung angepasst ist, wenn die Temperatur vorbestimmte Grenzen überschreitet.

11. Verbesserte wiederaufladbare Batterie nach einem der vorangehenden Ansprüche, wobei die Batterie eine Batterieummantelung aufweist, die für thermische Isolierung angepasst ist und die Ummantelung aus Aluminium oder einem anderen geeigneten Metall oder einer Metalllegierung hergestellt ist und mit Nylon beschichtet ist.

12. Verbesserte wiederaufladbare Batterie nach Anspruch 11, wobei die Nylonbeschichtung aus einem Nylontyp besteht, der als RILSAN (eingetragene Marke - ATOCHEM Elf Aguitaine) bekannt ist.

13. Verbesserte wiederaufladbare Batterie nach Anspruch 11 oder 12, wobei eine doppelte Beschichtung des Nylons auf sowohl die innere als auch die äußere Oberfläche der Ummantelung aufgetragen wird.

14. Verbesserte wiederaufladbare Batterie nach einem der vorangehenden Ansprüche, wobei ein In-situ-Schaumharz in die Batterie innerhalb der Ummantelung eingeführt wird, um zu schäumen und auszuhärten und Hohlräume innerhalb der Ummantelung auszufüllen.

15. Verbesserte wiederaufladbare Batterie nach einem der vorangehenden Ansprüche, in der eine Pluralität von Zellen innerhalb einer inneren Ummantelung untergebracht sind, die wiederum innerhalb einer äußeren Ummantelung untergebracht ist, und die einen Luftspalt zwischen der inneren Ummantelung und der äußeren Ummantelung aufweist und mit einer Heizung versehen ist, um den Luftspalt zu erwärmen als Reaktion auf einen Temperatursensor, der eine Reduzierung der Temperatur der Luft in dem Luftspalt unter eine vorbestimmte Schwelle erfasst.

16. Verbesserte wiederaufladbare Batterie nach Anspruch 15, wobei das Heizmittel durch die Batterie mit Strom versorgt wird.

17. Verbesserte wiederaufladbare Batterie nach einem der vorangehenden Ansprüche, wobei die Pluralität von Batteriezellen in einer Ummantelung untergebracht sind, die Batteriezellen vom Nickelmetallhybrid-Typ sind und die Ummantelung eine elektrisch betriebene Entlüftungsöffnung in der Ummantelung aufweist, die geöffnet wird, wenn die Batterie mit einer Wiederaufladungsvorrichtung gekoppelt ist.

18. Verbesserte wiederaufladbare Batterie nach Anspruch 17, wobei die Entlüftungsöffnung automatisch bei Initiierung der Wiederaufladung geöffnet wird und automatisch nach Beendigung der Wiederaufladung geschlossen wird.

## Revendications

1. Batterie rechargeable améliorée qui comprend ;
une pluralité de cellules de batterie dont au moins certaines sont connectées ensemble pour se décharger en parallèle, chacune des cellules se déchargeant en parallèle ou chaque groupe de groupes de cellules se déchargeant en parallèle disposant de sa propre entrée de recharge respective ; et un moyen de commutation pour commuter un nombre des cellules ou groupes de cellules de batterie se déchargeant en parallèle afin de réaliser une connexion sur leur entrée de recharge respective pour recharger chaque dite cellule ou chaque dit groupe de cellules de manière individuelle.

2. Batterie rechargeable améliorée selon la revendication 1, dans lequel chaque cellule est une cellule en hydrure de métal nickel ou en Ni-Cad.

3. Batterie rechargeable améliorée selon la revendication 1 ou 2, dans lequel l'entrée de recharge pour chaque cellule ou groupe de cellules de batterie comprend une goupille respective d'une prise multigoupille.

4. Batterie rechargeable améliorée selon la revendication 1, 2 ou 3 en combinaison avec un dispositif de recharge correspondant qui comprend une pluralité de moyens de recharge dans un boîtier et qui comporte un connecteur comportant une pluralité de goupilles ou de raccords pour un couplage sur ladite batterie rechargeable.

5. Batterie rechargeable améliorée selon la revendication 1, 2, 3 ou 4, dans lequel le moyen de commutation électrique comprend un ou plusieurs relais.

6. Batterie rechargeable améliorée selon la revendication 5, dans lequel le relais comprend des relais multipôles.

7. Batterie rechargeable améliorée selon la revendication 6, dans lequel le ou chaque relais est un relais qui comporte quatre pôles ou plus.

8. Batterie rechargeable améliorée selon l'une quelconque des revendications précédentes, dans lequel la batterie comprend en outre un processeur et des capteurs pour détecter et surveiller l'état de charge de la batterie.

9. Batterie rechargeable améliorée selon la revendication 8, dans lequel le processeur est adapté pour surveiller l'état de charge de chaque cellule ou groupe de cellules indépendamment de chaque autre cellule ou de chaque autre groupe de cellules.

10. Batterie rechargeable améliorée selon la revendication 8 ou 9, dans lequel les capteurs, ou des capteurs supplémentaires, détectent la température d'au moins l'une des cellules ou d'au moins l'un des groupes de cellules de manière individuelle ou des cellules de façon globale et le processeur est adapté pour altérer la vitesse de recharge ou pour arrêter la recharge si la température excède des limites prédéterminées.

11. Batterie rechargeable améliorée selon l'une quelconque des revendications précédentes, dans lequel la batterie comporte un carter de batterie qui est adapté pour une isolation thermique et le carter est réalisé à partir d'aluminium ou de tout autre métal ou alliage de métal approprié et est revêtu de nylon.

12. Batterie rechargeable améliorée selon la revendication 11, dans lequel le revêtement en nylon est d'un type de nylon qui est connu en tant que RILSAN (marque déposée-ATOCHEM Elf Aquitaine).

13. Batterie rechargeable améliorée selon la revendication 11 ou 12, dans lequel un revêtement double de nylon est appliqué sur à la fois les surfaces interne et externe du carter.

14. Batterie rechargeable améliorée selon l'une quelconque des revendications précédentes, dans lequel une résine à moussage in situ est introduite dans la batterie à l'intérieur du carter afin de mousser et de durcir et de remplir des vides à l'intérieur du carter.

15. Batterie rechargeable améliorée selon l'une quelconque des revendications précédentes, dans lequel une pluralité de cellules sont logées à l'intérieur d'un carter interne qui est logé à son tour à l'intérieur d'un carter externe, et comportant un espace d'air entre le carter interne et le carter externe et moyennant un moyen de chauffage qui est prévu pour chauffer l'espace d'air en réponse au fait qu'un capteur de température détecte une quelconque réduction de la température de l'air dans l'espace d'air au-dessous d'un seuil prédéterminé.

16. Batterie rechargeable améliorée selon la revendication 15, dans lequel le moyen de chauffage est alimenté par la batterie.

17. Batterie rechargeable améliorée selon l'une quelconque des revendications précédentes, dans lequel les cellules de la pluralité de cellules de batterie sont logées dans un carter, les cellules de batterie étant du type à hydrure de métal nickel et le carter comportant un évent qui est actionné électriquement dans le carter et qui s'ouvre lorsque la batterie est couplée à un dispositif de recharge.

18. Batterie rechargeable selon la revendication 17, dans lequel l'évent s'ouvre automatiquement suite à l'initiation d'une recharge et se ferme automatiquement suite à l'achèvement de la recharge.
